# EUROPEAN PATENT SPECIFICATION

(11) **EP 1 494 820 B1**
(45) Date of publication and mention of the grant of the patent: **24.05.2006**
(21) Application number: 03746247.0
(22) Date of filing: 04.04.2003
(51) Int. Cl.: B07C 5/36

(54) **A SYSTEM FOR THE SORTING OF OBJECTS**
EINRICHTUNG ZUM SORTIEREN VON GEGENSTÄNDEN
SYSTEME POUR TRIER DES OBJETS

(30) Priority: 05.04.2002 DK 200200508; 10.05.2002 DK 200200717
(43) Date of publication of application: 12.01.2005
(73) Proprietor: Anker Andersen A/S, 7160 Tørring (DK)
(72) Inventor: PETERSEN, Steen, Dk-7080 Borkop (DK)
(74) Representative: Larsen, Hans Ole
(86) International application number: PCT/DK2003/000221
(87) International publication number: WO 2003/086666

(56) References cited:
- EP-A- 0 841 267
- DE-A- 2 555 192
- US-A- 3 770 111
- US-A- 5 174 429
- US-A- 5 896 999

## Description

The invention relates to a system for the sorting of objects, wherein the objects, after having been identified in an identification apparatus, are conveyed to a sorting system comprising a conveyor having a plurality of ejectors which, on the basis of a signal from the identification apparatus, ejects a special type of object on the conveyor belt to a given reception location.

Used objects, such as packages from beverages, form part of a recycling system in which they are delivered to a point of sale which pays back the deposit. The point of sale is responsible for the sorting, transport, etc. of the used packages.

A multitude of various package types exist in the market, such as bottles of glass or plastics, cans of iron, aluminium or plastics. They moreover exist in a large number of physical variants.

Thus, it is clear that systems capable of handling used packages must be constructed at points of sale, such as supermarkets. It is observed in this connection that the packages are to be sorted not only according to how they look, but also according to which supplier has supplied the package.

Typically, used packages are delivered to a reception system comprising an identification apparatus, e.g. of the vision type, which identifies the used package with a view to calculating the deposit to be paid back. The used package is conveyed from the vision system into a conveyor belt where either a manual sorting or a partial machine sorting is carried out.

Today, the machine sorting takes place with a rather complicated, mechanical structure where ejectors are arranged above the conveyor belt. However, it is a drawback that some bottle types may get jammed under the action of the ejectors positioned above the belt. Also, there is a risk that operators may be injured because of the easily accessible, movable ejectors. Further, it is important that residual contents from bottles and cans as well as perhaps broken bottles are treated correctly in order to avoid damage to the machinery.

Accordingly, an object of the invention is to provide a system in particular for the sorting of bottles, cans and the like, wherein the sorting may be performed with as few and brief operational stoppages as possible, and in which good hygienic conditions are provided, where there is no risk that the machinery in the system is damaged due to residual contents or broken bottles. Finally, it is an object that the operators of the system do not risk being injured, e.g. getting their fingers jammed, when the ejectors return to their position of rest.

The object of the invention is achieved by a system of the type defined in the introductory portion of claim 1, which is characterized in that that the ejectors are arranged in a housing below the conveyor and out through gaps which are formed in the conveyor, and in that several ejectors are arranged along both sides of the sorting system, said ejectors just receiving a force when they are to eject an object, while they return to a position of rest in the gap by their own weight when the object has been ejected, and in that the housing is constructed symmetrically with a longitudinal V-shaped groove in which the gaps are provided, said V-shaped groove being terminated by inclined walls that are terminated by vertical walls.

With a view to making the objects hit the reception locations with their bottoms, it is advantageous if, as stated in claim 2, the ejectors are given an oblique movement through the gaps.

When, as stated in claim 3, the ejectors are formed by a plate with an ejection part terminated by a bent edge which is optionally coated with a frictional coating at whose one end a boss is arranged, and the ejectors may be moved in the gaps by means of connected drive mechanisms which are shielded by the housing, all movable parts which are not in contact with the objects to be sorted are effectively shielded, thereby protecting the operators against injury. It is moreover ensured that the objects are effectively ejected beyond the edge, since the boss prevents further movement of the object longitudinally of the system.

With a view to ensuring a system which is easy to service, it is an advantage if, as stated in claim 4, the conveyor is configured as two belts running in parallel and extending in depressions which are formed in their respect guide plates, said belts being arranged replaceably at the top of the housing on each side of the V-shaped groove. Replacement of the wearing parts of the conveyors is facilitated in this manner.

It is observed in this connection that even though the guide plates are made of steel, they are worn more rapidly than the belts which extend in the depressions. It is therefore advantageous that the guide plates are easy to replace.

When, as stated in claim 5, the housing extends obliquely downwards in the area where the guide plates are arranged, it is ensured that the obstacles being ejected may slide into the reception locations with a reduced risk of crushing, e.g. if the objects are bottles of glass.

This oblique movement may expediently be established in that, as stated in claim 6, each of the ejectors is pivotally connected with a pivot which is spaced from the gap, said ejectors having an arm to whose one end the pivot is fixed, while its other end merges into the ejection part of the ejector.

The movement of the ejectors may be established by actuators which are connected with the arm at a point between the pivot and the ejection part, as stated in claim 7.

With a view to guiding the objects through and out of the conveyor of the identification apparatus to another conveyor which has a path extending perpendicularly relative to the conveyor, it is an advantage if, as stated in claim 8, at least one inclined ramp is provided at the point where the conveyor meets the other conveyor. Hereby, the objects will slide down the ramp and be turned in the same direction when they hit the belts of the conveyor.

It is moreover expedient if, as stated in claim 9, the system has two inclined ramps which are arranged on each side of the conveyor, and, as stated in claim 10, that the inclined ramps are formed by bent plates which have an angle of 45° relative to the plane of the conveyor, and, as stated in claim 11, that the bent plate disposed closest to the identification apparatus, is bent inwards at its ends toward the conveyor at an angle of about 20°, thereby ensuring that all objects, and in particular bottles, will be turned in the same direction.

If the objects are formed by cans which are relatively light, it is an advantage if, as stated in claim 12, a narrow metal plate is arranged at an angle of about 45° at a short distance from the bent plate which is disposed closest to the identification apparatus, since a can, which might be disposed transversely, will hit the narrow metal plate and be turned correctly on the conveyor.

With a view to conveying objects from the conveyor roller of the identification apparatus to another conveyor which has a path extending perpendicularly relative to the conveyor rollers, it is an advantage if, as stated in claim 13, a reception device is provided, said reception device having three inclined faces which connect the conveyor rollers with the other conveyor.

Advantageously, as stated in claim 14, the free ends of the inclined faces are rounded, and, as stated in claim 15, two of the inclined faces extend in parallel with the other conveyor, and their angles are 105° and 152°, respectively, relative to horizontal.

A further expedient embodiment of the invention is defined in claim 16,

The invention will now be explained more fully with reference to the drawing, in which
- fig. 1: shows the outer configuration of the system according to the invention in perspective,
- fig. 2: shows the basic structure of the central parts of the system according to the invention in cross-section,
- fig. 3: shows a close-up of an ejector in an outer position,
- fig. 4: shows the structure of the ejector according to the invention,
- fig. 5: shows the system in an embodiment where objects are admitted perpendicularly to the system,
- fig. 6: shows a sketch of the system of fig. 6, seen from above,
- fig. 7: shows a reception device in an embodiment where the objects are discharged perpendicularly from an identification apparatus,
- fig. 8: shows the reception device of fig. 7, seen in cross-section. while
- fig. 9: shows the reception device of fig. 8, seen from the right.

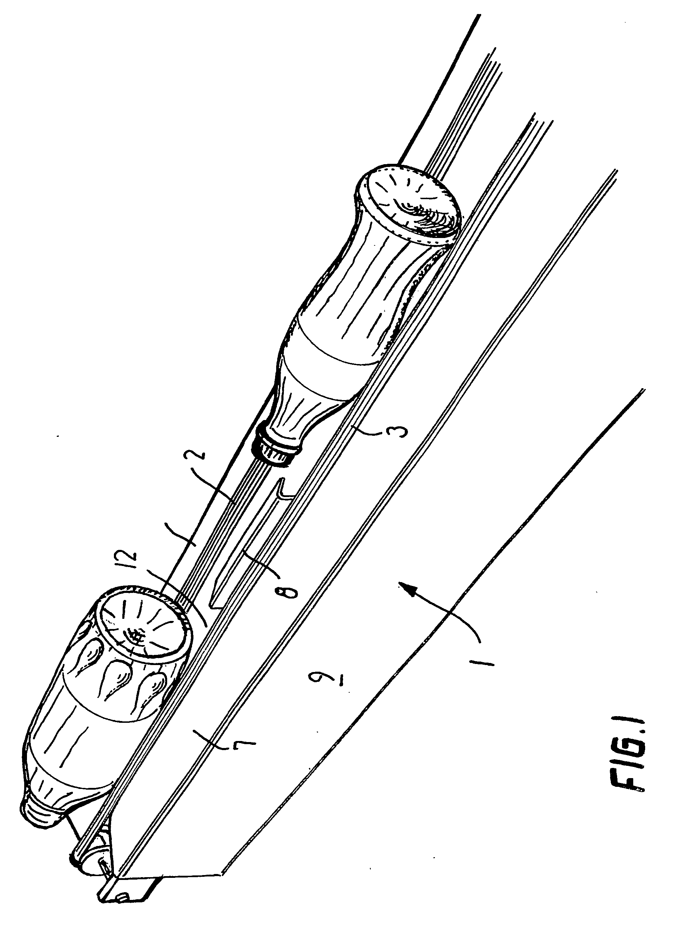

In fig. 1, a system as a whole according to the invention is designated 1.

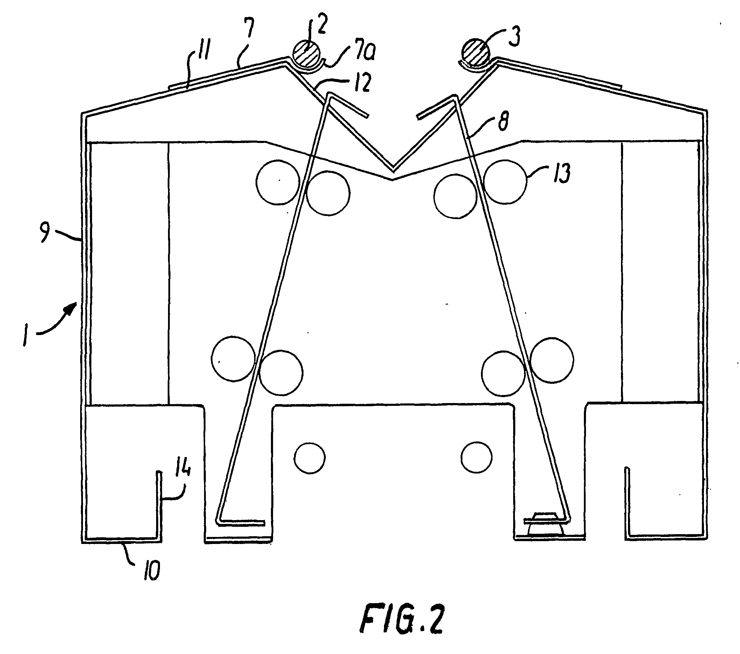

As will be seen, the system consists of a conveyor formed by two belts 2, 3 which transport objects, shown here as bottles 4. The two belts extend in depressions 7A in their respective guide plate 7, as will be seen best in fig. 2.

Fig. 1 moreover shows an ejector 8 whose function is to eject objects beyond the side of the system, as will be explained below.

Fig. 1 just shows one ejector, but, normally, several will be provided along both sides of the system. Reception locations (not shown) for the objects discharged by the ejectors are arranged at each ejector.

The system operates in the following manner:

An ordinary identification device (not shown in the figures) is arranged at one end of the system, said identification device being intended to identify the objects which are to be transported on the conveyor of the system. The identification may be performed by an image processing system, where the exterior of an object is imaged and compared with the images of objects previously stored in the identification apparatus, as is known in the art.

A signal is transferred to an actuator associated with the ejectors on the basis of the identification of the object, and this actuator, when receiving the signal from the identification unit, activates the ejector at the moment when the object reaches the ejector, which causes the object to be moved beyond the edge and down into a container or another suitable collecting unit which is positioned at the reception location.

The actual structure of the central parts of the system will now be explained in connection with fig. 2.

Fig. 2 shows the system 1 which is formed by a housing consisting of two vertical walls 9, which are terminated by inclined walls 11 at their one end and by a tray formed as two smaller, straight walls 10 and 14 at their other end.

The two smaller walls 10 and 14 together with the wall 9 form a shelf where electrical wires, plugs and the like necessary for the operation of the system may be placed.

The inclined walls 11 are terminated by additional inclined walls 12 which together form a V-shaped groove.

On top of the walls 11 and 12 there is arranged a guide plate 7 which, as will be seen, has a depression 7A which is terminated by a straight portion 7. This guide profile, which is easy to replace, is intended to receive the belts 2.

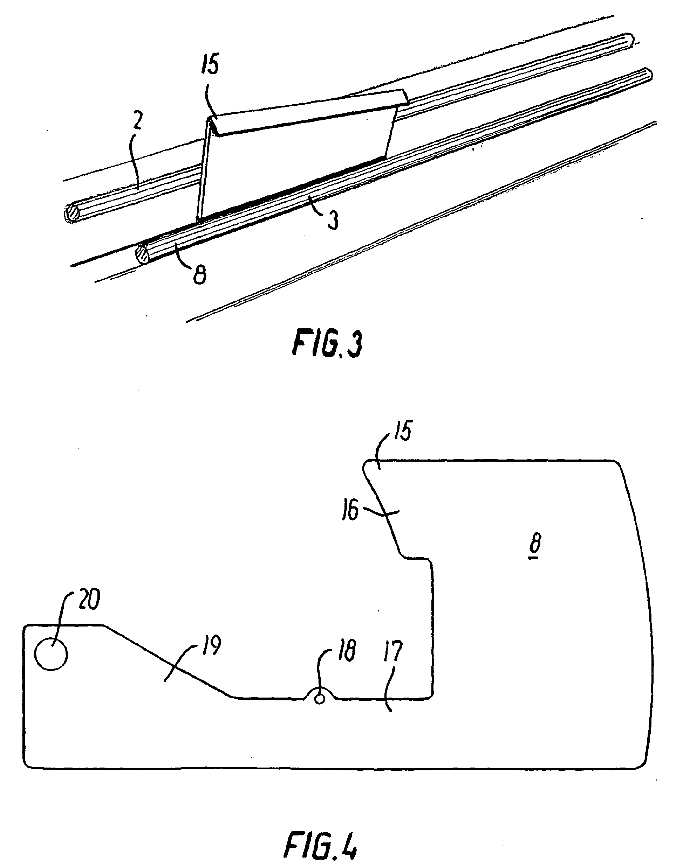

Fig. 2 moreover shows two ejectors 8 which may be moved into and out of the housing, as will be explained more fully in connection with fig. 3 and fig. 4.

Fig. 3 shows one of the ejectors 8 in figs. 1 and 2, but in a position protruding partly from the system, where it has just ejected an object (not shown).

As will be seen in fig. 4, the ejector 8 consists of an ejection part 16 which is terminated at the top by a bent edge 15. The bent edge may be provided with a frictional coating, e.g. of rubber, which may serve to brake e.g. the movement of a bottle. A boss (not shown) is provided at the end of the bent edge, and this boss serves as a stop for the movement of the bottle which is to be ejected.

At the bottom, the ejector is connected with an intermediate member 17 having an eye 18 which is adapted to be connected with an actuator (not shown). The intermediate member 17 is terminated by a connecting part 19 in which a pivot shown at 20 is provided.

The function of the ejector is as follows:

When the actuator (not shown) receives a signal from the identification apparatus, it will pull the ejector out of the gap in the inclined edges 12 of the housing, and since it is connected with a pivot 20 spaced from the pull eye 18, the ejector, as is shown in fig. 3, will be pulled out in an oblique movement and affect e.g. a bottle by a push beyond the edge to a reception location. The boss ensures that the movement of the bottle longitudinally of the conveyor is discontinued so that it goes not get past.

It is ensured with this pattern of movement that the bottle to be thrown beyond the edge will "land" with the bottom first in the reception location connected with the actuator.

After the object has been thrown beyond the edge, the actuator will drop back into the gap by its own force, until an activation is initiated again by a signal from the identification apparatus.

As will be appreciated from the above explanation, the invention is without mechanical parts which are disposed at a higher level than the objects which are to be sorted. Most mechanical parts and all electrical parts are concealed well in the housing of the system without any risk of the operators being exposed to danger in the operation of the system.

Nor do the ejectors with ejection parts involve any risk to the operators, as the ejection parts are only affected by a force when they leave the gaps, while they drop back into the gaps by their own weight when they have ejected an object.

Thus, a system for the sorting of objects, in particular bottles and cans, has been provided which, owing to its simple structure, is very reliable in operation and in any respect safe for the operators to use without any risk of injuries.

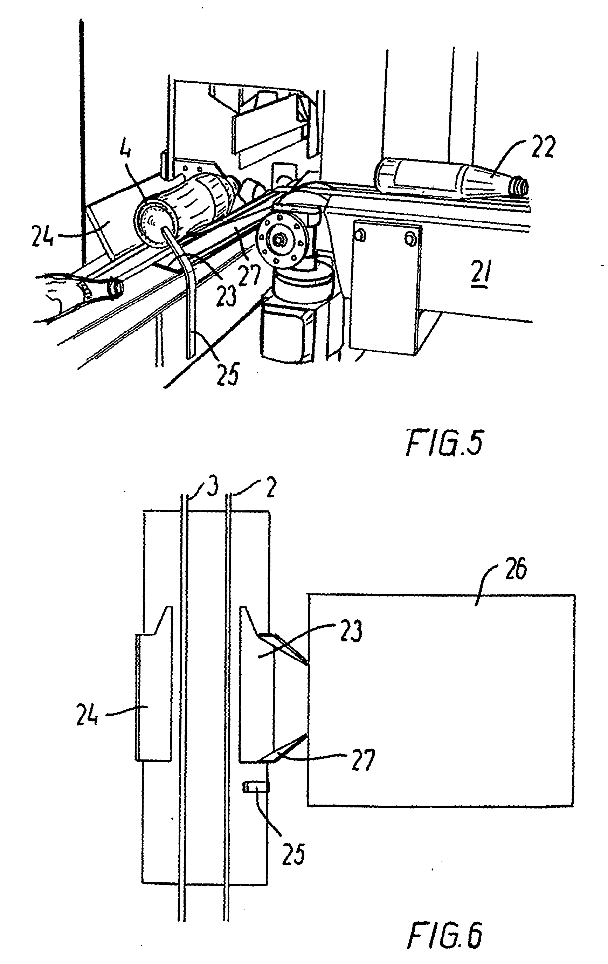

Fig. 5 shows the system shown in the preceding figures, but now in an embodiment where the objects, such as the bottles from a conveyor 21, are fed to the system perpendicularly to it, shown in fig. 5 at the bottle 4. As will be seen, the bottle 4 has just left the conveyor 21, while the bottle 22 is lying on the conveyor 21.

Fig. 6 shows the system in fig. 5, seen from above and in sketch form, but now with a sorting machine or an identification apparatus 26 connected to the system according to the invention.

As will be seen in figs. 5 and 6, a bent plate is secured on each side of the system, one being designated 24, the other being designated 23. The angle between the plates 24 and 23 is 90°, while the angle between the plane of the conveyor and the plates is 45°. The plate 23 moreover has a bend of about 20 ° at its ends, as will be seen best in fig. 6 at 27. As will be seen best in fig. 6, the plate 23 is configured as a hopper.

Finally, a narrow metal plate 25 is arranged at a small distance from the one of the plates which is disposed closest to the conveyor 21.

### The function of the bent plates shown in figs. 5 and 6 is as follows:

When the bottle 22 leaves the conveyor 21, it slides down the metal plate 23, and at the moment it hits the conveyor belts of the system the bottle 22 will lie down as shown with the bottle 4.

The plate 24 serves as a stop and guide plate so that all types of bottles will always lie down as shown in fig. 5.

If a can is transported by the conveyor 21, it may assume a position transverse to the system because of its low weight, but the can will be straightened by the thin metal plate 25 when the can hits it.

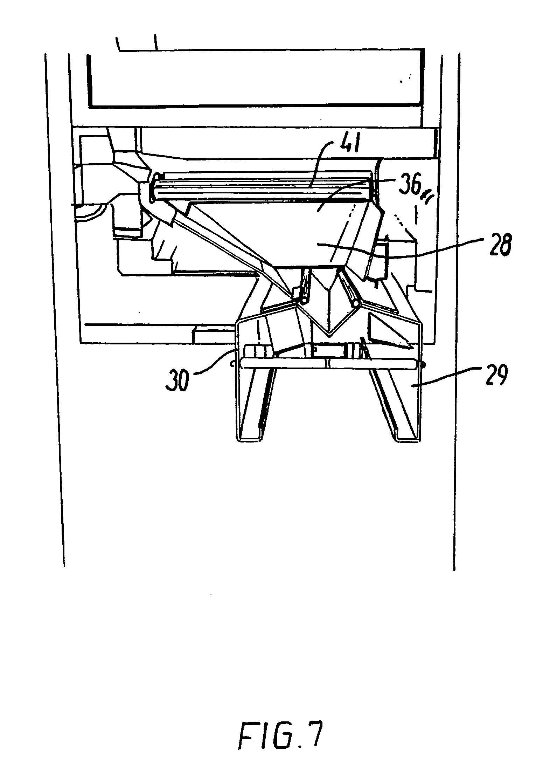

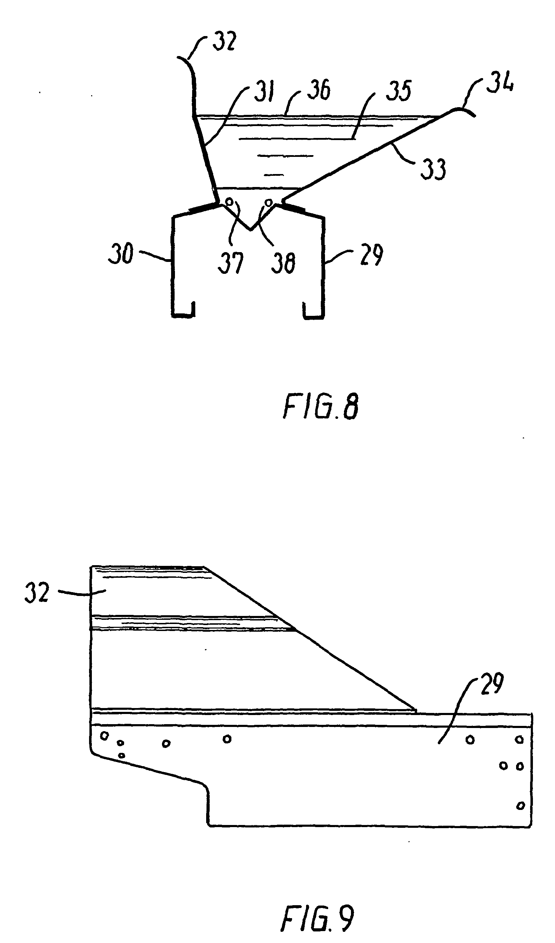

Reference is now made to figs. 7 - 9, which show a reception device that is arranged to receive bottles or cans perpendicular to the conveyor rollers of an identification apparatus, which are designated 41 in fig. 7.

The reception device consists of three downwardly inclined faces 31, 33 and 35 which are terminated at the bottom by conveyor belts 37, 38. As will be seen, the free ends of the faces 31, 33 and 35 are rounded.

### The reception device operates in the following manner:

When bottles or cans are moved out of the identification device, they will be oriented uniformly on the reception device and be fed by the conveyor from this to e.g. a sorting system of the type which has been explained in connection with figs. 1 - 4.

## Claims

1. A system for the sorting of bottles or cans, wherein the bottles or cans, after having been identified in an identification apparatus, are conveyed to a sorting system comprising a conveyor having a plurality of ejectors which, on the basis of a signal from the identification apparatus, ejects a particular type of bottle or can on the conveyor belt to a given reception location, **characterized in that** the ejectors are arranged in a housing below the conveyor and out through gaps which are formed in the conveyor, and **in that** several ejectors are arranged along both sides of the sorting system, said ejectors just receiving a force when they are to eject an object, while they return to a position of rest in the gap by their own weight when the object has been ejected, and **in that** the housing is constructed symmetrically with a longitudinal V-shaped groove in which the gaps are provided, said V-shaped groove being terminated by inclined walls (11) that are terminated by vertical walls (9).

2. A system according to claim 1, **characterized in that** the ejectors are given an oblique movement through the gaps.

3. A system according to claims 1 - 2, **characterized in that** the ejectors are formed by a plate with an ejection part terminated by a bent edge, which is optionally coated with a frictional coating at whose one end a boss is arranged, and that the ejectors may be moved in the gaps by means of connected drive mechanisms which are shielded by the housing.

4. A system according to claims 1 - 3, **characterized in that** the conveyor is configured as two belts extending in parallel and running in depressions which are formed in their respective guide plates, said belts being arranged replaceably at the top of the housing on each side of the V-shaped groove.

5. A system according to claim 4, **characterized in that** the housing extends obliquely downwards in the area where the guide plates are arranged.

6. A system according to claims 2 - 5, **characterized in that** the oblique movement is performed **in that** each of the ejectors is pivotally connected with a pivot which is spaced from the gap, said ejectors having an arm to whose one end the pivot is fixed, while its other end merges into the ejection part of the ejector.

7. A system according to claims 2 - 6, **characterized in that** the movement of the ejectors is provided by actuators which are connected with the arm at a point between the pivot and the ejection part.

8. A system according to claims 1 - 7, wherein the bottles or cans are conveyed through and out of the conveyor of the identification apparatus to another conveyor which has a path extending perpendicularly relative to the conveyor, **characterized in that** at least one inclined ramp is provided at the point where the conveyor meets the other conveyor.

9. A system according to claim 8, **characterized in that** it has two inclined ramps which are arranged on each side of the other conveyor.

10. A system according to claim 8 or 9, **characterized in that** the inclined ramps are formed by bent plates which have an angle of 45° relative to the plane of the conveyor.

11. A system according to claim 10, **characterized in that** the bent plate disposed closest to the identification apparatus is bent inwards at its ends toward the conveyor at an angle of about 20°.

12. A system according to claims 8 - 11, **characterized in that** a narrow metal plate is arranged at an angle of about 45° at a short distance from the bent plate which is disposed closest to the identification apparatus.

13. A system according to claims 1 - 7, wherein the bottles or cans are conveyed from the conveyor rollers of the identification apparatus to another conveyor which has a path extending perpendicularly to the conveyor rollers, **characterized by** a reception device which has three inclined faces which connect the conveyor rollers with the other conveyor.

14. A system according to claim 13, **characterized in that** the free ends of the inclined faces are rounded.

15. A system according to claims 13 - 14, **characterized in that** two of the inclined faces extend in parallel with the other conveyor, and that their angles are 105° and 152°, respectively, relative to horizontal.

16. A system according to claims 13 - 15, **characterized in that** the inclined faces have different areas.

## Patentansprüche

1. System zum Sortieren von Flaschen oder Dosen, wobei die Flaschen oder Dosen, nachdem sie in einer Identifizierungsvorrichtung identifiziert worden sind, zu einem Sortiersystem befördert werden, das eine Fördereinrichtung mit einer Vielzahl von Ausstoßeinrichtungen umfasst, und auf Basis eines Signals von der Identifizierungsvorrichtung einen bestimmten Typ Flasche oder Dose auf dem Förderband an eine bestimmte Aufnahmeposition ausstößt, **dadurch gekennzeichnet, dass** die Ausstoßeinrichtungen in einem Gehäuse unter der Fördereinrichtung angeordnet sind und über Spalte austreten, die in der Fördereinrichtung ausgebildet sind, und dass mehrere Ausstoßeinrichtungen entlang beider Seiten des Sortiersystems angeordnet sind, wobei die Ausstoßeinrichtungen eine Kraft genau dann aufnehmen, wenn sie ein Objekt ausstoßen sollen, während sie aufgrund ihres eigenen Gewichts an eine Ruheposition in dem Spalt zurückkehren, wenn das Objekt ausgestoßen worden ist, und dass das Gehäuse symmetrisch mit einer V-förmigen Längsnut aufgebaut ist, in der die Spalte vorhanden sind, wobei die V-förmige Nut durch geneigte Wände (11) abgeschlossen wird, die durch vertikale Wände (9) abgeschlossen werden.

2. System nach Anspruch 1, **dadurch gekennzeichnet, dass** die Ausstoßeinrichtungen in eine schräge Bewegung durch die Spalte hindurch versetzt werden.

3. System nach den Ansprüchen 1 - 2, **dadurch gekennzeichnet, dass** die Ausstoßeinrichtungen durch eine Platte mit einem Ausstoßteil gebildet werden, der durch eine gebogene Kante abgeschlossen wird, die wahlweise mit einer Reibbeschichtung beschichtet ist, an derem Ende eine Wulst angeordnet ist, und dass die Ausstoßeinrichtungen mittels verbundener Antriebsmechanismen in den Spalten bewegt werden können, die durch das Gehäuse abgeschirmt sind.

4. System nach den Ansprüchen 1 - 3, **dadurch gekennzeichnet, dass** die Fördereinrichtung als zwei Bänder ausgeführt ist, die sich parallel erstrecken und in Vertiefungen laufen, die in ihren entsprechenden Führungsplatten ausgebildet sind, wobei die Bänder austauschbar an der Oberseite des Gehäuses an jeder Seite der V-förmigen Nut angeordnet sind.

5. System nach Anspruch 4, **dadurch gekennzeichnet, dass** sich das Gehäuse in dem Bereich, in dem die Führungsplatten angeordnet sind, schräg nach unten erstreckt.

6. System nach den Ansprüchen 2 - 5, **dadurch gekennzeichnet, dass** die schräge Bewegung **dadurch** durchgeführt wird, dass jede der Ausstoßeinrichtungen schwenkbar mit einer Drehachse verbunden ist, die von dem Spalt beabstandet ist, wobei die Ausstoßeinrichtungen einen Arm haben, an dessen einem Ende die Drehachse befestigt ist, während sein anderes Ende in den Ausstoßteil der Ausstoßeinrichtung übergeht.

7. System nach den Ansprüchen 2 - 6, **dadurch gekennzeichnet, dass** die Bewegung der Ausstoßeinrichtungen durch Betätigungselemente erzeugt wird, die mit dem Arm an einem Punkt zwischen der Drehachse und dem Ausstoßteil verbunden sind.

8. System nach den Ansprüchen 1 - 7, wobei die Flaschen oder Dosen durch die Fördereinrichtung der Identifizierungsvorrichtung hindurch und aus ihr heraus zu einer anderen Fördereinrichtung befördert werden, die einen Weg hat, der relativ zu der Fördereinrichtung senkrecht verläuft, **dadurch gekennzeichnet, dass** wenigstens eine geneigte Rampe an dem Punkt vorhanden ist, an dem die Fördereinrichtung auf die andere Fördereinrichtung trifft.

9. System nach Anspruch 8, **dadurch gekennzeichnet, dass** sie zwei geneigte Rampen hat, die an jeder Seite der anderen Fördereinrichtung angeordnet sind.

10. System nach Anspruch 8 oder 9, **dadurch gekennzeichnet, dass** die geneigten Rampen durch gebogene Platten gebildet werden, die einen Winkel von 45° relativ zur Ebene der Fördereinrichtung haben.

11. System nach Anspruch 10, **dadurch gekennzeichnet, dass** die gebogene Platte, die am nächsten an der Identifizierungsvorrichtung angeordnet ist, an ihren Enden in einem Winkel von ungefähr 20° nach innen auf die Fördereinrichtung zu gebogen ist.

12. System nach den Ansprüchen 8 - 11, **dadurch gekennzeichnet, dass** eine schmale Metallplatte in einem Winkel von ungefähr 45° in einem kurzen Abstand zu der gebogenen Platte angeordnet ist, die am nächsten an der Identifizierungsvorrichtung angeordnet ist.

13. System nach den Ansprüchen 1 - 7, wobei die Flaschen oder Dosen von den Förderwalzen der Identifizierungsvorrichtung zu einer anderen Fördereinrichtung befördert werden, die einen Weg hat, der senkrecht zu den Förderwalzen verläuft, **gekennzeichnet durch** eine Aufnahmeeinrichtung, die drei geneigte Flächen hat, die die Förderwalzen mit der anderen Fördereinrichtung verbinden.

14. System nach Anspruch 13, **dadurch gekennzeichnet, dass** die freien Enden der geneigten Flächen abgerundet sind.

15. System nach den Ansprüchen 13 - 14, **dadurch gekennzeichnet, dass** sich zwei der geneigten Flächen parallel zu der anderen Fördereinrichtung erstrecken und dass ihre Winkel 105° bzw. 152° zur Horizontalen betragen.

16. System nach den Ansprüchen 13 - 15, **dadurch gekennzeichnet, dass** die geneigten Flächen verschiedene Grundflächen haben.

## Revendications

1. Système destiné au tri de bouteilles ou récipients, dans lequel les bouteilles ou récipients, après avoir été identifiés dans un appareil d'identification, sont acheminés jusqu'à un système de triage comprenant un convoyeur ayant plusieurs éjecteurs lesquels, sur la base d'un signal provenant de l'appareil d'identification, éjectent un type particulier de bouteille ou récipient sur la bande du convoyeur vers un lieu donné de réception, **caractérisé en ce que** les éjecteurs sont disposés dans un boîtier en dessous du convoyeur et sortent à travers des ouvertures qui sont formées dans le convoyeur, et **en ce que** plusieurs éjecteurs sont disposés le long des deux côtés du système de triage, lesdits éjecteurs recevant une force au moment exact où ils doivent éjecter un objet, tandis qu'ils reviennent à une position de repos dans l'ouverture sous l'effet de leur propre poids lorsque l'objet a été éjecté, et **en ce que** le boîtier est construit symétriquement avec une rainure en forme de V dans laquelle les ouvertures sont disposées, ladite rainure en forme de V se terminant par des parois inclinées (11) lesquelles se terminent par des parois verticales (9).

2. Système selon la revendication 1, **caractérisé en ce qu'**on donne aux éjecteurs un mouvement oblique au travers des ouvertures.

3. Système selon les revendications 1 et 2, **caractérisé en ce que** les éjecteurs sont formés par une plaque avec une partie d'éjection terminée par un bord recourbé, laquelle est optionnellement revêtue d'un revêtement de friction et sur une extrémité de laquelle un bossage est disposé, et **en ce que** les éjecteurs peuvent être déplacés dans les ouvertures au moyen de mécanismes d'entraînement connectés qui sont protégés par le boîtier.

4. Système selon les revendications 1 à 3, **caractérisé en ce que** le convoyeur est configuré sous la forme de deux bandes s'étendant en parallèle et se déplaçant dans des creux qui sont formés sur leurs plaques de guidage respectives, lesdites bandes étant disposées de façon remplaçable au sommet du boîtier sur chaque côté de la rainure en forme de V.

5. Système selon la revendication 4, **caractérisé en ce que** le boîtier s'étend obliquement vers le bas dans la zone dans laquelle les plaques de guidage sont disposées.

6. Système selon les revendications 2 à 5, **caractérisé en ce que** le mouvement oblique est réalisé de sorte que chacun des éjecteurs est connecté de façon pivotante avec un pivot qui est espacé de l'ouverture, lesdits éjecteurs ayant un bras à une extrémité duquel le pivot est fixé, tandis que l'autre extrémité fusionne avec la partie d'éjection de l'éjecteur.

7. Système selon les revendications 2 à 6, **caractérisé en ce que** le mouvement des éjecteurs est procuré par des actionneurs qui sont connectés avec le bras en un point situé entre le pivot et la partie d'éjection.

8. Système selon les revendications 1 à 7, dans lequel les bouteilles ou récipients sont acheminés au travers et à l'extérieur du convoyeur de l'appareil d'identification vers un autre convoyeur qui a un chemin s'étendant perpendiculairement par rapport au convoyeur, **caractérisé en ce qu'**au moins une rampe inclinée est disposée au point auquel le convoyeur rencontre l'autre convoyeur.

9. Système selon la revendication 8, **caractérisé en ce qu'**il présente deux rampes inclinées qui sont disposées de chaque côté de l'autre convoyeur.

10. Système selon la revendication 8 ou 9, **caractérisé en ce que** les rampes inclinées sont formées par des plaques penchées qui forment un angle de 45° par rapport au plan du convoyeur.

11. Système selon la revendication 10, **caractérisé en ce que** la plaque penchée disposée le plus près de l'appareil d'identification est penchée en avant à son extrémité en direction du convoyeur selon un angle d'environ 20°.

12. Système selon les revendications 8 à 11, **caractérisé en ce qu'**une étroite plaque de métal est disposée selon un angle d'environ 45° à une courte distance de la plaque inclinée qui est disposée au plus près de l'appareil d'identification.

13. Système selon les revendications 1 à 7, dans lequel les bouteilles ou récipients sont acheminés depuis les rouleaux de convoyeur de l'appareil d'identification vers un autre convoyeur qui a un chemin s'étendant perpendiculairement aux rouleaux de convoyeur, **caractérisé par** un dispositif de réception qui a trois faces inclinées qui relient les rouleaux du convoyeur avec l'autre convoyeur.

14. Système selon la revendication 13, **caractérisé en ce que** les extrémités libres des faces inclinées sont arrondies.

15. Système selon les revendications 13 et 14, **caractérisé en ce que** deux des faces inclinées s'étendent en parallèle avec l'autre convoyeur, et **en ce que** leurs angles sont de 105° et 152°, respectivement, par rapport à l'horizontale.

16. Système selon les revendications 13 à 15, **caractérisé en ce que** les faces inclinées ont des aires différentes.
